# EUROPEAN PATENT SPECIFICATION

(11) **EP 2 412 565 B1**
(45) Date of publication and mention of the grant of the patent: **02.03.2016**
(21) Application number: 10007795.7
(22) Date of filing: 27.07.2010
(51) Int. Cl.: B60N 2/28, B60R 21/055, B60R 22/28

(54) **Energy absorbing element for a child safety seat**
Energieabsorbierendes Element für ein Kindersitz
Élément d'absorption d'énergie pour siège de sécurité enfant

(43) Date of publication of application: 01.02.2012
(73) Proprietor: BRITAX RÖMER Kindersicherheit GmbH, 89077 Ulm (DE)
(72) Inventor: Bendjellal, Farid, 89077 Ulm (DE)
(74) Representative: Bosch, Matthias

(56) References cited:
- DE-U1-202008 008 884
- GB-A- 2 262 025
- GB-A- 2 356 604

## Description

The subject-matter of the present invention is an energy absorbing element for a child safety seat.

During the last decades it has become common practice to employ child safety seats for the safe transport of children in vehicles. In many countries it is even mandatory to use a child safety seat to transport a child until the child has reached a certain age or height. When a child safety seat is employed in a vehicle, it is usually fixed to one of the seats of the vehicle.

In principle there are two classes of child safety seats. These classes can be distinguished according to the seat belt system that is employed for the safety seat. In the first class, the child safety seat is equipped with a proper safety belt system, often called an integral harness. The child safety seats in the second class do not comprise an integral harness. In contrast, a child sitting in a child safety seat of the second class is secured with the seat belt of the vehicle seat on which the child safety seat is positioned. In most cases this will be a three-point seat belt.

The present invention relates to child safety seats of the latter class. These child safety seats which are usually referred to as booster seats, are adequate for children with a weight in the range of 15 to 36 kilograms and with an age in the range of 4 to 12 years.

A deficiency of most booster seats is that they do not properly protect from the so called lap belt syndrome. The lap belt syndrome is an injury mechanism due to the penetration of the lap belt into the abdominal region of the body. As this body part is very weak, injuries from belt loading can have serious consequences. The natural path of the lap belt is that it is in contact with the pelvic iliac wing. The pelvic anatomy of children differs distinctly from that of adults: The iliac wings are smaller and the overall pelvic skeletal structure is more deformable. Therefore, in the event of an accident, children are much more likely to slip under the lap strap of a vehicle's seat belt than adults. This effect, often referred to as submarining, is the main cause of the lap belt syndrome. As a result, children are much more exposed to the lap belt syndrome than adults.

Several booster seats have been proposed to reduce the risk of injury due to the lap belt syndrome.

The child safety seat known from the Australian patent AU 1998 67999 B2, for example, comprises an auxiliary strap secured to the seat body of the child safety seat so as to extend between the legs of a child occupant of the seat. This auxiliary strap can be coupled to a portion of the lap portion of the vehicle seat belt. By this, slipping of the child's body under the lap strap of the vehicle seat belt can be prevented. The auxiliary strap has to be coupled to the lap belt each time a child is seated into the child safety seat.

The child safety seat known from UK patent application GB 2 146 895 A comprises ramp means adjacent the front edge of the seat defining a raised portion extending across the entire width of the seat to restrain submarining of the child sitting in the seat. These ramp means push against the legs of the child and thus reduce the comfort the child safety seat can provide.

DE 20 2008 008 884 U1 describes means for absorbing forces impacting on a seat belt of a child safety seat due to a sudden, high impact load. The child safety seat described in DE 20 2008 008 884 U1 comprises an integral harness, i.e. a system of straps provided by the child safety seat for securing a child in the child safety seat. This integral harness comprises shoulder straps and a crotch strap. Since the child is fixed in the child safety seat by a crotch strap, there is no risk of the child slipping under a lap strap of a vehicle's seat belt. Consequently, the "lap belt syndrome" and the problem of "submarining" are not addressed in DE 20 2008 008 884 U1.

It is the object of the present invention to provide means for a child safety seat which decrease the risk of submarining without negatively affecting the comfort of the child safety seat. This object is solved by the energy absorbing element for a child safety seat in accordance with the invention with the features of claim 1. Further embodiments of the present invention are indicated in subclaims 2 to 11.

The energy absorbing element for a child safety seat according to the present invention comprises a first housing component, a second housing component, and a resilient or deformable member, wherein the second housing component is movably mounted to the first housing component to allow a crash-induced tilting of the child safety seat to be counteracted by a movement of the second housing component relative to the first housing component and exhibits a surface that is adapted for guiding a seat belt, and wherein the resilient or deformable member is designed and arranged to absorb energy from a movement of the second housing component towards the first housing component.

In a preferred embodiment of the present invention the second housing component is pivotally mounted to the first housing component and the resilient or deformable member is designed and arranged to absorb energy from a pivotal movement of the second housing component towards the first housing component.

In another preferred embodiment of the present invention the second housing component is slidably mounted to the first housing component and the resilient or deformable member is designed and arranged to absorb energy from a translational movement of the second housing component towards the first housing component.

The second housing component preferably comprises sustaining means which spread the load exerted on the second housing component by the resilient or deformable member across the second housing component.

The first housing component preferably comprises sustaining means which spread the load exerted on the first housing component by the resilient or deformable member across the first housing component.

Advantageously the resilient or deformable member is a spring or a deformable element. This spring or deformable element may be a flat spring, a torsion spring, a gas pressure spring, an air cushion, or any pocket that deforms under pressure, especially comprising a foam-like material.

In a preferred embodiment of the present invention the energy absorbing element comprises belt securing means which are designed and arranged to retain a seat belt on the surface of the second housing component that is adapted for guiding a seat belt.

In a child safety seat comprising an energy absorbing element according to the present invention, the first housing component of the energy absorbing element is preferably firmly mounted to the child safety seat. In this case forces acting on the energy absorbing element will eventually be lead into the child safety seat via the first housing component.

Although a child safety seat in accordance with the invention may comprise just one energy absorbing element, it will preferably comprise two energy absorbing elements and may even comprise more than two energy absorbing elements. The energy absorbing elements are conveniently arranged symmetrically on the child safety seat.

A child safety seat in accordance with the invention comprising two armrests will preferably comprise two energy absorbing elements which are advantageously positioned below the arm rests. A seat belt guided across the energy absorbing elements will then be positioned below the arm rests. As a result, the arm rests assist the energy absorbing elements in keeping the seat belt at a low position.

The risk of a child slipping under the lap strap of a vehicle's seat belt, i.e. the risk of submarining, is especially high if the seat belt is not properly positioned on the child sitting in the child safety seat. As mentioned above, booster seats are usually employed for children of age 4-12 years. Parents of children within that age range are regularly less concerned about the way their children are restrained in their safety seats than parents of younger children and pay less attention to the correct placement of the seat belt. By comprising a surface that is adapted for guiding a seat belt, the energy absorbing element for a child safety seat according to the invention provides a means for clearly indicating where the seat belt should be positioned, thus simplifying the correct placement of the seat belt. When the seat belt is guided across the surface that is adapted for guiding a seat belt, it is automatically installed in the preferred position and preferably runs across the child safety seat in close contact to the child's thighs. The surface that is adapted for guiding a seat belt is conveniently designed to attract the user's attention in order to invite correct positioning of the seat belt. This may be achieved, for example, by giving the surface that is adapted for guiding a seat belt a special color, such as a signal color, especially red.

A crash of a vehicle carrying a child safety seat usually has severe consequences on the dynamics of the child safety seat. A frontal crash of the vehicle into an obstacle, for example, leads to a rapid deceleration of the vehicle. This deceleration is transferred to the child safety seat by the fastening means by which the child safety seat is secured to one of the seats of the vehicle. Child safety seats are typically secured to the vehicle either by specific fastening means, such as the latches and loops of the well-known ISOFIX system, or by a seat belt of the vehicle, such as a three-point belt, in which case the safety seat is primarily secured by the lap belt portion of the seat belt. Thus, in both cases the lower rear part of the child safety seat is connected to the seat of the vehicle. Since the center of gravity of the child safety seat is situated well above the lower rear part of the child safety seat, the child safety seat tilts forward around the fastening means when the vehicle is abruptly decelerated and is pressed into the cushion of the vehicle seat. As a result, the lap portion of the seat belt, by which the child sitting in the safety seat is secured to the safety seat, tends to slide upward, away from its preferred position.

This unwanted crash-induced displacement of the lap portion of the seat belt is mainly suppressed by the energy absorbing element for a child safety seat according to the invention.

A movement, in particular a pivotal movement, of the second housing component of the energy absorbing element relative to the first housing component can counteract the crash-induced tilting of the safety seat described above. When the first housing component is fixedly mounted to the safety seat it will tilt along with the safety seat, thus changing its orientation relative to the vehicle seat. The orientation of the second housing component relative to the vehicle seat, however, can be essentially maintained by allowing the second housing component to move, in particular to pivot, towards the first housing component. Since the surface that is adapted for guiding a seat belt is provided on the second housing component, the orientation of this surface relative to the vehicle seat will largely be unaffected by the tilting of the child safety seat. Hence, the lap portion of the seat belt, which runs across the surface that is adapted for guiding a seat belt, will not slide upward but maintain its preferred position on the belt guiding surface.

By providing a resilient or deformable member which is designed and arranged to absorb energy from a movement, in particular from a pivotal movement, of the second housing component towards the first housing component, energy impacting on the child safety seat can be absorbed. During a frontal impact of the vehicle, the vehicle is rapidly decelerated. This deceleration is transferred to a child sitting in a safety seat by the seat belt of the vehicle. Hence, the child's body impacts on the seat belt with a certain kinetic energy, thus stressing the seat belt. Since the seat belt is guided across the energy absorbing element according to the invention, stressing the seat belt moves the second housing component of the energy absorbing element towards the first housing component. The resilient or deformable member extracts energy from this movement, thus softening, as a result, the child's impact on the seat belt. As the tension in the lap belt is limited by the energy absorbing element, the tendency of the lap belt to rise up and over the iliac crest and on to the abdominal organs is reduced.

The second housing component can be slidably mounted to the first housing component. In this case, stressing a seat belt running across the surface of the second housing component that is adapted for guiding a seat belt will result in a translational movement of the second housing component relative to the first housing component. Again, a resilient or deformable member may be provided for absorbing energy from this movement. It is also possible to permit a combined pivotal and translational movement or any other suitable movement of the second housing component.

By providing the first housing component, the second housing component, or both housing components of the energy absorbing element according to the invention with sustaining means which spread the load exerted on the housing component by the resilient or deformable member across the housing component, the proper operation of the energy absorbing element can be ensured. During an accident, considerable forces will act on the energy absorbing element. These forces will be transferred at least in part by the resilient or deformable member from the second housing component to the first housing component and vice versa. By incorporating sustaining means according to the invention, a concentration of these forces on a small area, which might damage the energy absorbing element, can be avoided. Suitable sustaining means might be web-like enforcements, preferably forming an integral part of the housing components, or separate extended elements, or a combination thereof.

In the energy absorbing element in accordance with the invention energy is preferably absorbed by plastic deformation of the resilient or deformable member. Energy may also be absorbed by elastic deformation of the resilient or deformable member. In this case advantageously means are provided which ensure that energy taken up by the resilient or deformable member is not immediately given back. Otherwise, kinetic energy of the movement of the two housing components towards each other would first be transformed into potential energy and stored in the resilient or deformable member but would subsequently be retransformed into kinetic energy, i.e. the two housing components would again be driven apart. This retransformation of potential energy into kinetic energy is not desired in the energy absorbing element according to the invention.

For example, if a spring is employed as resilient or deformable member which is compressed when the second housing component is moved towards the first housing component, ratchet-like means could be provided to prevent the compressed spring from extending again. In case the second housing component is pivotally mounted to the first housing component, the ratchet-like means are conveniently integrated into the pivot.

The plastic or elastic deformation of the resilient or deformable member may conveniently be realized by compressing or by stretching the resilient or deformable member. The degree to which energy can be absorbed by the resilient or deformable member is highly dependent on its shape and the substance it is made from. A preferred substance for a spring-like resilient or deformable member will be metal, especially suitable alloys. To reduce the weight of the energy absorbing element in accordance with the.invention it might be advantageous to choose a synthetic material for the resilient or deformable member, such as a thermoplastic resin. If the resilient or deformable member is provided in the shape of a cushion or pad, employing a light-weight material for its assembly is especially practicable. Employing a foam-like material which may have an open-cell structure or a closed-cell structure for the resilient or deformable member may further reduce its weight.

If a pocket or bag that deforms under pressure is used as resilient or deformable member, according to the invention it may be advantageous to provide the pocket or bag with one or more vents, especially comprising valves, to allow for a controlled flow of air out of and/or into the pocket or bag.

In the alternative embodiment of the present invention comprising a first housing component and a second housing component, wherein the first or second housing component comprises a deformable region which is designed and arranged to absorb energy by a compression of said deformable region, a reduction of the complexity of the energy absorbing element in accordance with the invention is achieved in that in this embodiment there is no need for the inclusion of an extra resilient or deformable member. Hence, in this embodiment the number of parts needed to assemble the energy absorbing element for a child safety seat in accordance with the invention can be reduced, resulting in lower costs of production. The energy absorbing element may even be built without including any movable parts. The specifics of the resilient or deformable member discussed above are equally applicable to the deformable region of this alternative embodiment of the invention.

In a preferred embodiment of the present invention the first or second housing component may, in its entirety, be designed and arranged to absorb energy by a compression thereof. It may even be advantageous to make both first and second housing component compressible, in which case a distinction between first and second housing component is no longer required or even possible.

By equipping the energy absorbing element for a child safety seat according to the invention with belt securing means which are designed and arranged to retain a seat belt on the surface of the second housing component that is adapted for guiding a seat belt, the positive effects of the energy absorbing element on the security provided by the child safety seat may be further enhanced. The belt securing means make sure that the seat belt does not, especially in the event of an accident, leave its designated position on the energy absorbing element. Thus, the proper operation of the energy absorbing element can be ensured. Such belt securing means may have the shape of, for example hook-like, elevations of the surface of the second housing component that is adapted for guiding a seat belt positioned on both edges of the seat belt.

The conceptual operating mode and some preferred embodiments of the present invention will be explained in more detail by means of drawings. There show:
Fig. 1 a perspective illustration of a child safety seat according to the invention with an energy absorbing element;
Fig. 2a a perspective illustration of a child safety seat according to the invention illustrating the undesired rising of the lap belt the energy absorbing element according to the invention is to counteract;
Fig. 2b a perspective illustration of the child safety seat of Fig. 2a with the lap belt in its preferred position;
Fig. 3 an enlarged view of the energy absorbing element of the child safety seat of Fig. 1;
Fig. 4 an enlarged view of the energy absorbing element of the child safety seat of Fig. 1 wherein the child safety seat is tilted forward;
Fig. 5 a sectional view of the energy absorbing element of Fig. 3;
Fig. 6a a preferred embodiment of a resilient or deformable member in accordance with the invention in its original shape;
Fig. 6b the resilient or deformable member of Fig. 6a after it has absorbed energy.

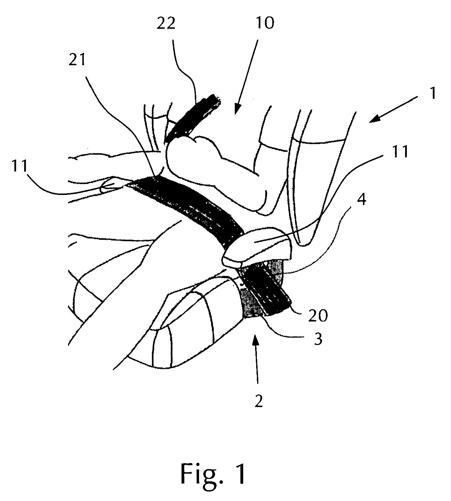

The child safety seat 1 depicted in Figure 1 comprises two energy absorbing elements 2 in accordance with the invention, only one being visible in Figure 1. A child 10 sitting in the child safety seat 1 is secured by a seat belt 20 which in this case is a three-point belt comprising a lap belt section 21 and a diagonal belt section 22. While the lap belt section 21 mainly secures the pelvic region of the child's 10 body, the diagonal belt section 22 mainly secures the child's 10 upper body. The child safety seat 1 furthermore comprises two armrests 11. The energy absorbing elements 2 are laterally attached to both sides of the child safety seat 1 and are positioned below the armrests 11. Each of the energy absorbing elements 2 comprises a first housing component 3 and a second housing component 4.

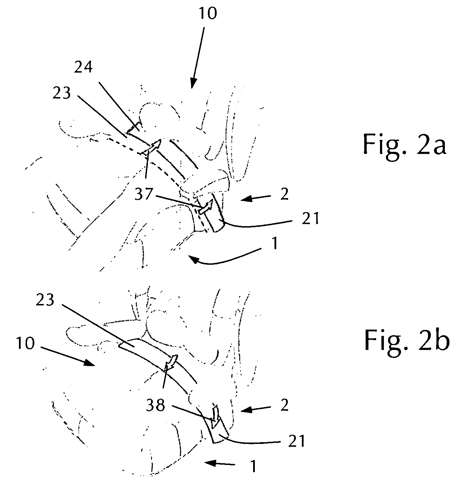

Figure 2a shows a child safety seat 1 according to the invention carrying a child 10. The lap belt section 21 of the seat belt 20 is shown in its preferred position 23 wherein the lap belt section 21 is guided across the seat 1 in close contact to the thighs of the child 10. If the lap belt section 21 rises along direction 37 to position 24, the risk of submarining of the child 10 grows. It is this rising of the lap belt section 21 which is to be suppressed by the energy absorbing element 2 in accordance with the invention.

The effect of the energy absorbing element 2 in accordance with the invention is illustrated in Figure 2b. In the event of an accident, the energy absorbing element 2 counteracts the rising of the lap belt section 21 and induces a displacement of the lap belt section 21 in the direction 38 to the preferred position 23.

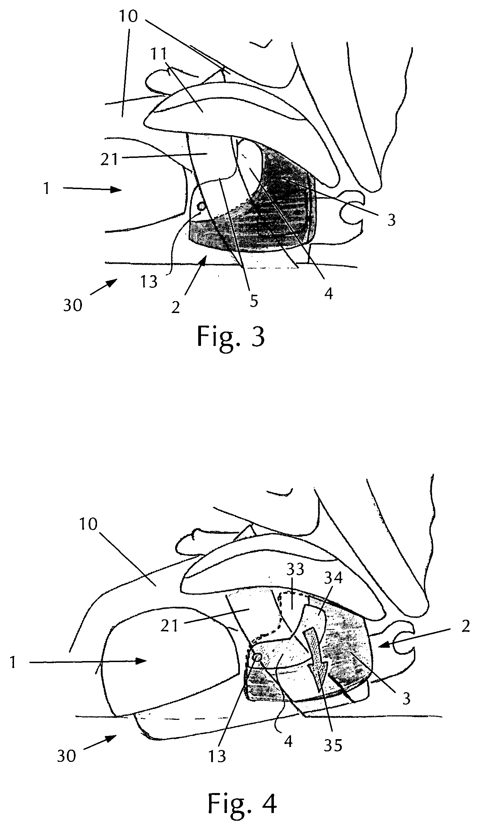

As shown in Figure 3, the child safety seat 1 is positioned on the cushion 30 of a vehicle seat. The second housing component 4 of the energy absorbing element 2 is pivotally mounted to the first housing component 3. The second housing component 4 can pivot around the pivot axis 13. The lap belt section 21 of the seat belt 20 is guided across the surface 5 of the second housing component 4 that is adapted for guiding a seat belt. During normal travel of the vehicle, the child safety seat 1 rests evenly on the cushion 30 of the vehicle seat to which it is attached.

When the vehicle is suddenly decelerated, however, the child safety seat 1 tends, as was described above, to tilt forward. This situation is depicted in Figure 4. As a result of this forward-tilting, the cushion 30 of the vehicle seat is compressed by the child safety seat 1. During deceleration of the vehicle the child safety seat 1 is pushed forward towards the seat belt 20. As the child safety seat 1 is pushed forward also the energy absorbing element 2 is pushed towards the lap belt section 21. As a result, a force is applied to the energy absorbing element by the lap belt section 21 of the seat belt 20. Since the second housing component 4 is movably, in this case pivotally, mounted to the first housing component 3, this force leads to a movement of the second housing component 4 relative to the first housing component 3. As shown in Figure 4, the second housing component 4 is pivoted in direction 35 towards the first housing component 3 around the pivot axis 13 from its rest position 33 into an active position 34.

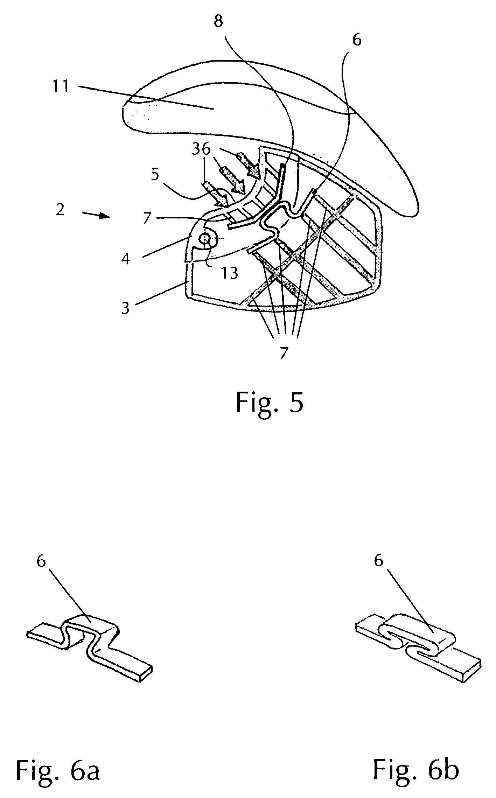

Figure 5 shows a sectional view of the energy absorbing element as depicted in Figure 3. Both the first housing component 3 and the second housing component 4 comprise web-like enforcements 7 as sustaining means which spread the load exerted on the housing components. Furthermore, there is provided an extended clamp-like pad 8 as sustaining means. An elongated strip made of any suitable material bent into Omega-like shape acts as resilient or deformable member 6. The resilient or deformable member 6 is positioned between the first housing component 3 and the second housing component 4. The two outer sections of the resilient or deformable member 6 are supported by the web-like enforcements 7 of the first housing component 3. The middle section of the resilient or deformable member 6 is supported by the clamp-like pad 8 which in turn is supported by the web-like enforcements 7 of the second housing component 4.

A force acting on the second housing component 4 in direction 36 will pivot the second housing component 4 toward the first housing component 3 around the pivot axis 13 thereby compressing the resilient or deformable member 6. Due to the arrangement of the web-like enforcements 7 and the clamp-like pad 8 described above, the load exerted on the first 3 and second 4 housing components during compression of the deformable or resilient member 6 is spread across the first 3 and second 4 housing components, respectively.

Figure 6a shows a perspective view of the resilient or deformable member 6 of Figure 5 in its uncompressed state, whereas Figure 6b shows a perspective view of the same resilient or deformable member 6 after it has been compressed.

### List of Reference Signs

- 1: child safety seat
- 2: energy absorbing element
- 3: first housing component
- 4: second housing component
- 5: surface that is adapted for guiding a seat belt
- 6: resilient or deformable member
- 7: sustaining means
- 8: clamp-like pad
- 10: child
- 11: armrest
- 13: pivot axis
- 20: seat belt
- 21: lap belt section of seat belt
- 22: diagonal section of seat belt
- 23: preferred position of lap belt
- 24: raised position of lap belt
- 33: rest position of second housing component
- 34: active position of second housing component
- 35: pivoting direction
- 36: direction of belt force
- 37: direction of rising lap belt
- 38: displacement of lap belt induced by energy absorbing element

## Claims

1. A child safety seat (1) comprising an energy absorbing element (2) with
• a first housing component (3),
• a second housing component (4), and
• a resilient or deformable member (6),
wherein said second housing component (4) exhibits a surface (5) that is adapted for guiding a seat belt (20) and
wherein said resilient or deformable member (6) is designed and arranged to absorb energy from a movement of said second housing component (4) towards said first housing component (3),
**characterized in that** said second housing component (4) is movably mounted to said first housing component (3) to allow a crash-induced tilting of said child safety seat (1) to be counteracted by a movement of said second housing component (4) relative to said first housing component (3),
and wherein said first housing component is firmly mounted to said child safety seat.

2. A child safety seat (1) according to claim 1, wherein said second housing component (4) is pivotally mounted to said first housing component (3) and wherein said resilient or deformable member (6) is designed and arranged to absorb energy from a pivotal movement of said second housing component (4) towards said first housing component (3).

3. A child safety seat (1) according to claim 1, wherein said second housing component (4) is slidably mounted to said first housing component (3) and wherein said resilient or deformable member (6) is designed and arranged to absorb energy from a translational movement of said second housing component (4) towards said first housing component (3).

4. A child safety seat (1) according to any of the preceding claims, wherein said second housing component (4) comprises sustaining means (7) which spread the load exerted on said second housing component (4) by said resilient or deformable member (6) across said second housing component (4).

5. A child safety seat (1) according to any of the preceding claims, wherein said first housing component (3) comprises sustaining means (7) which spread the load exerted on said first housing component (3) by said resilient or deformable member (6) across said first housing component (3).

6. A child safety seat (1) according to any of the preceding claims, wherein said resilient or deformable member (6) is a spring or a deformable element.

7. A child safety seat (1) according to claim 6, wherein said spring or deformable element is a flat spring, a torsion spring, a gas pressure spring, an air cushion, or any pocket that deforms under pressure, especially comprising a foam-like material.

8. A child safety seat (1) according to any of the preceding claims, comprising belt securing means which are designed and arranged to retain a seat belt (20) on said surface (5) of said second housing component (4) that is adapted for guiding a seat belt (20).

9. A child safety seat (1) according to any of the preceding claims comprising two energy absorbing elements (2) and two armrests (11), wherein said energy absorbing elements (2) are positioned below said armrests (11).

## Patentansprüche

1. Kindersitz (1) mit einem energieabsorbierenden Element (2) mit
• einer ersten Gehäusekomponente (3),
• einer zweiten Gehäusekomponente (4), und
• einem elastischen oder verformbaren Teil (6),
wobei die zweite Gehäusekomponente (4) eine Oberfläche (5) aufweist, die dazu ausgelegt ist, einen Sicherheitsgurt (20) zu führen, und
wobei das elastische oder verformbare Teil (6) dazu ausgelegt und angeordnet ist, Energie aus einer Bewegung der zweiten Gehäusekomponente (4) in Richtung der ersten Gehäusekomponente (3) zu absorbieren,
**dadurch gekennzeichnet, dass**
die zweite Gehäusekomponente (4) beweglich an der ersten Gehäusekomponente (3) angebracht ist, um zu ermöglichen, dass einem durch Aufprall verursachten Kippen des Kindersitzes (1) durch eine Bewegung der zweiten Gehäusekomponente (4) in Bezug zu der ersten Gehäusekomponente (3) entgegengewirkt wird,
und wobei die erste Gehäusekomponente fest an dem Kindersitz angebracht ist.

2. Kindersitz (1) nach Anspruch 1, wobei die zweite Gehäusekomponente (4) schwenkbar an der ersten Gehäusekomponente (3) angebracht ist, und wobei das elastische oder verformbare Teil (6) dazu ausgelegt und angeordnet ist, Energie aus einer Schwenkbewegung der zweiten Gehäusekomponente (4) in Richtung der ersten Gehäusekomponente (3) zu absorbieren.

3. Kindersitz (1) nach Anspruch 1, wobei die zweite Gehäusekomponente (4) gleitend an der ersten Gehäusekomponente (3) angebracht ist, und wobei das elastische oder verformbare Teil (6) dazu ausgelegt und angeordnet ist, Energie aus einer Translationsbewegung der zweiten Gehäusekomponente (4) in Richtung der ersten Gehäusekomponente (3) zu absorbieren.

4. Kindersitz (1) nach einem der vorhergehenden Ansprüche, wobei die zweite Gehäusekomponente (4) Haltemittel (7) aufweist, die die auf die zweite Gehäusekomponente (4) ausgeübte Last durch das elastische oder verformbare Teil (6) über die zweite Gehäusekomponente (4) verteilen.

5. Kindersitz (1) nach einem der vorhergehenden Ansprüche, wobei die erste Gehäusekomponente (3) Haltemittel (7) aufweist, die die auf die erste Gehäusekomponente (3) ausgeübte Kraft durch das elastische oder verformbare Teil (6) über die erste Gehäusekomponente (3) verteilen.

6. Kindersitz (1) nach einem der vorhergehenden Ansprüche, wobei das elastische oder verformbare Teil (6) eine Feder oder ein verformbares Element ist.

7. Kindersitz (1) nach einem der vorhergehenden Ansprüche, wobei die Feder oder das verformbare Element eine Blattfeder, eine Torsionsfeder, eine Gasdruckfeder, ein Luftkissen oder eine beliebige Tasche ist, die sich unter Druck verformt, insbesondere mit einem schaumstoffartigen Material.

8. Kindersitz (1) nach einem der vorhergehenden Ansprüche, der Gurtsicherungsmittel aufweist, die dazu ausgelegt und angeordnet sind, einen Sicherheitsgurt (20) auf der Oberfläche (5) der zweiten Gehäusekomponente (4) zu halten, die dazu ausgelegt ist, einen Sicherheitsgurt (20) zu führen.

9. Kindersitz (1) nach einem der vorhergehenden Ansprüche, der zwei energieabsorbierende Elemente (2) und zwei Armlehnen (11) aufweist, wobei die energieabsorbierenden Elemente (2) unter den Armlehnen (11) angeordnet sind.

## Revendications

1. Siège (1) de sécurité pour enfant comprenant un élément (2) d'absorption d'énergie avec
• un premier composant (3) de logement,
• un deuxième composant (4) de logement, et
• un élément (6) résilient ou déformable,
dans lequel ledit deuxième composant (4) de logement affiche une surface (5) qui est adaptée à guider une ceinture de sécurité (20) et
dans lequel ledit élément (6) résilient ou déformable est conçu et agencé pour absorber une énergie provenant d'un mouvement dudit deuxième composant (4) de logement vers ledit premier composant (3) de logement,
**caractérisé en ce que** ledit deuxième composant (4) de logement est monté mobile sur ledit premier composant (3) de logement pour permettre qu'un basculement induit par un accident dudit siège (1) de sécurité pour enfant soit contrebalancé par un mouvement dudit deuxième composant (4) de logement par rapport audit premier composant (3) de logement,
et dans lequel ledit premier composant de logement est fermement monté sur ledit siège de sécurité pour enfant.

2. Siège (1) de sécurité pour enfant selon la revendication 1, dans lequel ledit deuxième composant (4) de logement est monté pivotant sur ledit premier composant (3) de logement et dans lequel ledit élément (6) résilient ou déformable est conçu et agencé pour absorber une énergie provenant d'un mouvement de pivotement dudit deuxième composant (4) de logement vers ledit premier composant (3) de logement.

3. Siège (1) de sécurité pour enfant selon la revendication 1, dans lequel ledit deuxième composant (4) de logement est monté coulissant sur ledit premier composant (3) de logement et dans lequel ledit élément (6) résilient ou déformable est conçu et agencé pour absorber une énergie provenant d'un mouvement de translation dudit deuxième composant (4) de logement vers ledit premier composant (3) de logement.

4. Siège (1) de sécurité pour enfant selon l'une quelconque des revendications précédentes, dans lequel ledit deuxième composant (4) de logement comprend un moyen de soutien (7) qui répartit la charge exercée sur ledit deuxième composant (4) de logement par ledit élément (6) résilient ou déformable sur tout ledit deuxième composant (4) de logement.

5. Siège (1) de sécurité pour enfant selon l'une quelconque des revendications précédentes, dans lequel ledit premier composant (3) de logement comprend un moyen de soutien (7) qui répartit la charge exercée sur ledit premier composant (3) de logement par ledit élément (6) résilient ou déformable sur tout ledit premier composant (3) de logement.

6. Siège (1) de sécurité pour enfant selon l'une quelconque des revendications précédentes, dans lequel ledit élément (6) résilient ou déformable est un ressort ou un élément déformable.

7. Siège (1) de sécurité pour enfant selon la revendication 6, dans lequel ledit ressort ou élément déformable est un ressort plat, un ressort de torsion, un ressort à pression de gaz, un coussin d'air, ou une quelconque poche qui se déforme sous une pression, spécialement comprenant un matériau de type mousse.

8. Siège (1) de sécurité pour enfant selon l'une quelconque des revendications précédentes, comprenant des moyens de fixation de ceinture qui sont conçus et agencés pour retenir une ceinture de sécurité (20) sur ladite surface (5) dudit deuxième composant (4) de logement qui est adaptée à guider une ceinture de sécurité (20).

9. Siège (1) de sécurité pour enfant selon l'une quelconque des revendications précédentes, comprenant deux éléments (2) d'absorption d'énergie et deux accoudoirs (11), dans lequel lesdits éléments (2) d'absorption d'énergie sont positionnés en-dessous desdits accoudoirs (11).
